(19) Europäisches Patentamt
European Patent Office
Office européen des brevets

(11) **EP 1 445 075 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**12.01.2022   Patentblatt 2022/02**

(45) Hinweis auf die Patenterteilung:
**12.04.2017   Patentblatt 2017/15**

(21) Anmeldenummer: **04001285.8**

(22) Anmeldetag: **22.01.2004**

(51) Int Cl.:
**B25J 9/16** (2006.01)         **G05B 19/406** (2006.01)

(54) **Verfahren zum Überwachen eines Roboters und Roboter mit einer Überwachungseinrichtung**

Method for monitoring a robot and robot with monitoring means

méthode pour surveiller un robot et robot munie de moyens de surveillance

(84) Benannte Vertragsstaaten:
**AT BE BG CH CY CZ DE DK EE ES FI FR GB GR HU IE IT LI LU MC NL PT RO SE SI SK TR**

(30) Priorität: **01.02.2003   DE 10304019**

(43) Veröffentlichungstag der Anmeldung:
**11.08.2004   Patentblatt 2004/33**

(73) Patentinhaber: **KUKA Deutschland GmbH 86165 Augsburg (DE)**

(72) Erfinder:
• **Heiligensetzer, Peter, Dr.**
  **86163 Augsburg (DE)**
• **Berninger, Alwin**
  **86482 Aystetten (DE)**
• **Settele, Norbert**
  **86574 Petersdorf-Wilprechtszell (DE)**

(74) Vertreter: **Böss, Dieter Alexander et al Schirmgasse 268 84028 Landshut (DE)**

(56) Entgegenhaltungen:
JP-A- 8 118 284     JP-A- 11 058 278
US-A- 5 130 632

• **K. SUITA et al.: "A failure-to-safety ''Kyozon'' system with simple contact detection and stop capabilities for safe human -autonomous robot coexistence", Proc. IEEE Int. Conf. on Robotics and Automation, 1995, pages 3089-3096,**
• **H.-B. KUNTZE et al.: "On A SMART STRUCTURE VARIABLE SUPERVISORY CONTROL CONCEPT FOR HUMANOID ROBOTS", Int. Conf. on Humanoid Robots Karlsruhe, Conference Documentation, January 2003 (2003-01),**
• **M. L. VISINSKY et al.: "Robotic fault detection and fault tolerance: A survey", Reliabilty Engineering and System Safety, vol. 46, 1994, pages 139-158,**
• **D.G. LUENBERGER: "Observing the state of a linear system", IEEE Transaction on Military Electronics, vol. 8, 1964, pages 74-80,**

EP 1 445 075 B2

**Beschreibung**

Die Erfindung betrifft ein Verfahren zum Überwachen von beweglichen Teilen eines Industrieroboters sowie ein Industrieroboter mit beweglichen Teilen. Zur Realisierung eines sogenannten "Sicheren Roboters" sind folgende Maßnahmen bekannt:

- Limitierung der Achsgeschwindigkeit durch softwaremäßige Begrenzung;

- Limitierung der Geschwindigkeiten durch Begrenzung der Zwischenkreisspannung;

- Überwachung der Geschwindigkeit und/oder der Position über mehrere redundante Überwachungskanäle;

- Kollisionsüberwachung durch Überwachung der Antriebsmomente über die Motorströme;

- Kollisionsüberwachung durch separate Sensorik, z.B. zur Feststellung der Annäherung an Hindernisse (kapazitiv, induktiv, Ultraschall, visuell) oder von Berührungskräften (Druckmessmatten mit verschiedenen physikalischen Prinzipien);

- Ausschluss bestimmter Teile des Arbeitsraums durch mechanische Anschläge oder durch Software.

Die genannten Maßnahmen sind zum Teil als alleinige Maßnahmen nicht sicher, sondern nur in Verbindung mit mindestens einem weiteren Überwachungskanal, sie sind zum Teil aufwendig. In der Regel wird daher durch Mehrkanaligkeit, d.h. Überwachung und Heranziehung mehrerer Messungen eine hinreichende Redundanz vorgesehen. Darüber hinaus beinhaltet auch eine redundante Überwachung bisher, dass identische oder verwandte Messgrößen lediglich durch zwei oder mehrere Sensoren als Messwerte erfasst und die (gemessenen) Messwerte über getrennte Kanäle übertragen und verarbeitet werden, so dass lediglich Fehler der Erfassung, Übertragung und Verarbeitung ausgeschaltet werden konnten, nicht aber der erfassten Messgrößen oder physikalischen Größen selbst.

In der US 5,130,632 wird in einer sicherheitstechnischen Ausführungsform beschrieben, dass Messwerte eines ersten Kraftsensors mit Messwerten eines zweiten Kraftsensors verglichen werden, um durch eine solche redundante Auswertung Sensorfehler erkennen zu können. In dieser Ausführungsform werden identische Messgrößen, nämlich die Kraft, erfasst und keine zwei unterschiedliche Messgrößen herangezogen.

Der Erfindung liegt die Aufgabe einer Verbesserung der Überwachung eines Industrieroboters, zur Erhöhung der Sicherheit.

Erfindungsgemäß wird die genannte Aufgabe mit einem Verfahren gemäß dem Patentanspruch 1 gelöst.

Außerdem wird erfindungsgemäß die genannte Aufgabe mit einem Industrieroboter gemäß dem Patentanspruch 10 gelöst.

Messgröße ist die zu messende physikalische Größe, Messwert das unmittelbare Ergebnis eines Sensors und gegebenenfalls Wandlers, Messergebnis das Ergebnis einer rechnerischen, insbesondere elektronischen Verarbeitung eines Messwerts, insbesondere um einen Ausgangswert mit dem Messwert oder einem von diesem abgeleiteten Messergebnis einer anderen physikalischen Größe zu erhalten.

Durch die Erfindung werden unterschiedliche oder diversitäre physikalische Messgrößen zur redundanten Überwachung eines Roboters herangezogen und es werden damit diversitäre Messsignale oder -werte zur Verfügung gestellt. Hierdurch wird eine bessere redundante und damit sichere Überwachung eines Industrieroboters ermöglicht, vor allem dahingehend, dass der Roboter generell oder situationsabhängig vorgegebene Geschwindigkeiten nicht überschreitet, was zur Begrenzung des Nachlaufweges bei Stop und zur Begrenzung der kinetischen Energie wichtig ist, dass der Roboter weiterhin vorgegebene Beschleunigungswerte nicht überschreitet, was zur Vermeidung unkontrollierter Bewegungszustände bei Störung in der Regelung wichtig ist und schließlich dass Kollisionen mit Hindernissen sicher erkannt werden.

In äußerst bevorzugter Ausgestaltung ist dabei vorgesehen, dass beispielsweise zusätzlich zur Überwachung der Bewegung eines Roboters durch Motorstrommessungen vorgesehen ist, dass als zumindest eine Messgröße Materialspannungen an Teilen des Roboters gemessen werden bzw. durch Messeinrichtungen zur Bestimmung von Materialspannungen.

Insbesondere wesentlich ist, dass durch diese Messung von Materialspannungen bzw. der Ausbildung eines Roboters derart, dass an ihm Materialspannungen gemessen werden, gerade hierdurch ein zusätzlicher diversitärer Mess- und Verarbeitungskanal zur Verfügung gestellt wird, dessen Messsignal oder -wert keine Abhängigkeiten von korrespondierenden Werten in der Robotersteuerung, wie beispielsweise der Materialstreumessung hat, so dass störende Einflüsse nicht zu systematisch gleichen oder ähnlichen Messfehlern in allen diversitären Mess- und Verarbeitungskanälen führen. Darüber hinaus kann der aus der Materialspannung gewonnene Messwert auch zusätzlich für andere Zwecke eingesetzt werden.

Insbesondere ermöglicht die erfindungsgemäße Überwachung von Materialspannungen indirekt die Überwachung von Reaktionsmomenten und Kräften als Ergebnis von Kollisionen, Beschleunigungen und Bewegungsgeschwindigkeiten (Zentrifugalkraft, Corioliskraft),die zu Belastung der Roboterstruktur und damit zu den zu messenden Materialspannungen führen.

Es werden Materialspannungen an mehreren Punkten der Roboterstruktur gemessen, wobei entsprechende Messwertaufnehmer an mindestens zwei Seiten der Schwinge oder des Roboterarms angebracht sind und zwar an Ober- bzw. Unterseite und rechte bzw. linke Seite.

In bevorzugter Ausgestaltung des erfindungsgemäßen Verfahrens ist dabei vorgesehen, dass die Materialspannungen mittels mindestens eines Messwertaufnehmers gemessen werden, wobei insbesondere Materialspannungen mittels eines Dehnungsmessstreifens gemessen werden oder aber Materialspannungen mittels eines lichtleiterbasierten Aufnehmers gemessen werden. Ein erfindungsgemäßer Roboter, ist in Weiterbildung derart ausgestaltet, dass die Einrichtungen zur Bestimmung von Materialverspannungen als Messwertaufnehmer ausgebildet sind, wobei wiederum insbesondere Einrichtungen zur Bestimmung von Materialspannungen als Dehnungsmessstreifen ausgebildet sind oder Einrichtungen zur Bestimmung von Materialspannung als piezoelektrische oder auch lichtleiterbasierte Aufnehmer ausgebildet sind. Es ist dabei grundsätzlich möglich, verschiedene Arten von Messerwertaufnehmern einzusetzen, die vorgenannten also zu kombinieren.

Da der Verlauf der zu messenden Messgröße und damit der durch Messung erhaltenen Messwerte, insbesondere von Materialspannungen, durch die Überlagerung von Kräften und Momenten sehr komplex sein kann, erfolgt die Auswertung der Sensorinformation vorzugsweise durch Vergleich mit Referenzverläufen, wobei sich derartige Referenzverläufe einerseits synthetisch durch Berechnung über ein entsprechendes mathematisches Modell oder durch Aufzeichnung der realen Messwerte unter bekannten Bedingungen (ohne Störeinflüsse) erzeugen lassen. In weiterer bevorzugter Ausgestaltung ist daher vorgesehen, dass aktuelle Messwerte oder Messergebnisse mit Referenzwerten verglichen werden, wobei insbesondere aktuelle Messwerte oder Messergebnisse mit Referenzwerten unter Berücksichtigung von Toleranzen gemessen werden und/oder Toleranzen durch Bildung eines Referenzkorridors zu einer Referenzkurve berücksichtigt werden. Weichen die Messwerte oder Messergebnisse von der entsprechenden Referenzkurve stärker als zulässig ab, so kann auf ein unvorhergesehenes Ereignis, z.B. eine Kollision mit dem Bediener geschlossen werden. Die zulässige Grenze der Abweichung wird durch ein Toleranzband (Referenzkorridor) definiert.

Dabei kann in bevorzugter Weise vorgesehen sein, dass bei Abweichungen von erwarteten Messwerten oder Messergebnissen ein Stillsetzen des Roboters erfolgt, wobei insbesondere, wie schon vorstehend angedeutet, die Messung von MaterialSpannungen zur Überwachung der Bewegung des Roboters zusammen mit der Messung anderer Überwachungsgrößen als redundante Überwachung erfolgt.

Eine Weiterbildung des erfindungsgemäßen Roboters sieht vor, dass auf mindestens zwei Flächen eines Roboterteils jeweils mindestens eine Einrichtung zur Bestimmung von Materialspannungen angeordnet ist.

In bevorzugter Ausgestaltung ist eine Überwachungseinrichtung vorgesehen, mit der mindestens eine Einrichtung zur Bestimmung von Materialspannungen an Roboterteilen verbunden ist.

Die Redundanz bei der Prüfung auf unerwartete Ergebnisse wird erreicht durch gleichzeitige Auswertung der erfindungsgemäß überwachten Materialspannungen zusammen mit mindestens einem weiteren Messkanal, wozu insbesondere herangezogen werden können über das Wegmesssystem in der Steuerung softwaremäßig ermittelte Positionen und/oder Geschwindigkeiten oder aber Motormomente, die über Stromsensoren in den Antriebsverstärkern gemessen werden.

Meldet keiner der redundanten Messkanäle eine Überschreitung des Toleranzbandes, darf auf Störungsfreiheit geschlossen werden. Meldet mindestens einer der Messkanäle eine Überschreitung, wird durch eine sichere Logik der Roboter gestoppt und in einen sicheren Zustand gebracht, indem Bremsen geschlossen und Antriebe energielos geschaltet werden.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigt:

Fig. 1    ein Blockdiagramm zur Überwachung der Bewegungen eines Roboters.

Fig. 2    ein Diagramm zur Erfassung und Bewertung von Materialspannungen an einem Roboterteil.

Fig. 3    ein konkretes Ausgestaltungsbeispiels zur Erfassung von Materialspannungen an einem Roboter aufgrund einer Bewegung um die A1-Achse.

Fig. 4    ein konkretes Ausgestaltungsbeispiels zur Erfassung von Materialspannungen an einem Roboter aufgrund einer Bewegung um die A3-Achse.

Fig. 5      einen Roboter, dessen Roboterarm in Kontakt mit der Schulter einer Person gelangt;

Fig. 6      einen Roboter mit schematischer Darstellung des Reaktionsmoments auf die Beschleunigung der Achse A3;

Fig. 7      einen Roboter mit schematischer Darstellung der bei Bewegung um die vertikale Achse A1 auftretenden Zentrifugal- und Corioliskräfte;

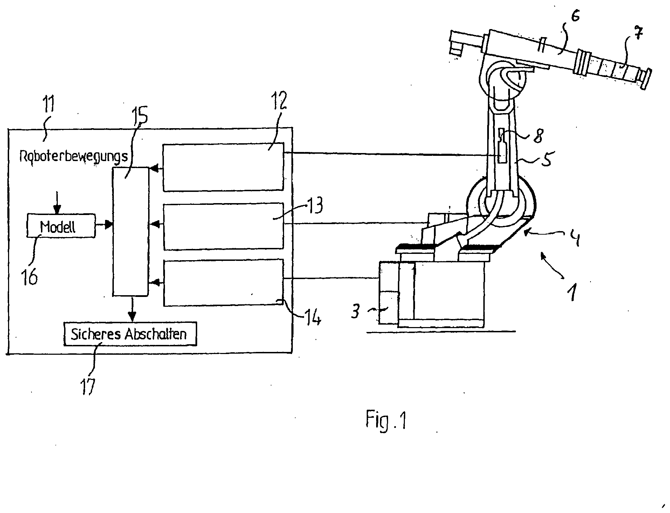

Die Fig. 1 zeigt ein Blockschalbild zur Durchführung des erfindungsgemäßen Verfahrens der Überwachung eines Roboters mittels Empfang unterschiedlicher - diversitärer - physikalischer Messgrößen mittels eines redundanten Messsystems, am Beispiel der Heranziehung von Materialspannungen in der Struktur eines Industrieroboter 1.5.

Bei Betrieb eines Roboters können in Teilen desselben Kräfte und Momente auftreten, die zu Materialspannungen innerhalb der Teile des Roboters führen, welche über geeignete Einrichtungen, wie Dehnungsmessstreifen 8 oder auch lichtleiterbasierte Aufnehmer (nicht dargestellt) erfasst und damit auch während des Betriebs des Roboters hinsichtlich des Abweichens von vorgegebenen Wertverläufen oder von vorgegebenen oder erwarteten Wertverläufen überwacht werden können.

Der Industrieroboter der Fig. 1 weist einen Robotersockel 2, an diesem angeordneten Umrichter 3, einen auf dem Sockel 2 drehbar um die vertikale erste Roboterachse A1 angeordneten Karussell 4, eine um die horizontale zweite Achse A2 schwenkbar angelenkten Roboterschwinge 5, einen an deren der Schwinge 4 abgewandten freien Ende um eine weitere horizontale Roboterachse A3 schwenkbar angelenkten Roboterarm 6 auf, an dessen freien, dem Roboterarm 5 abgewandten Ende wiederum eine Roboterhand 7 angeordnet ist. An Schwinge 4 und Roboterarm 6 sind Dehnungsmessstreifen 8 angeordnet.

Es ist ein Roboter 1 dargestellt und zusätzlich als Blockschaltbild eine Überwachungseinrichtung 11. Die Überwachungseinrichtung 11 weist eine Überwachungseinheit 12 zur Überwachung von Dehnungen der Roboterstruktur, eine Überwachungseinheit 13 zur Überwachung der Position von Roboterteilen unter Berücksichtigung des Zeitablaufs und damit der Geschwindigkeit sowie schließlich eine Überwachungseinheit 14 zur Überwachung des Motorstroms aus den Umrichtern 3 und damit des Antriebsmoments auf.

In einer Vergleichseinheit 15 im Rahmen der Überwachungsvorrichtung 11 werden die durch die Einheiten 12, 13, 14 gemessenen Messwerte oder Messergebnisse mit Modellwerten eines Modells 16 verglichen. Weichen die gemessenen Werte von vorgegebenen Werten bzw. einem vorgegebenen Verlauf ab, so erfolgt über eine Schalteinrichtung 17 ein sicheres Abschalten des Roboters.

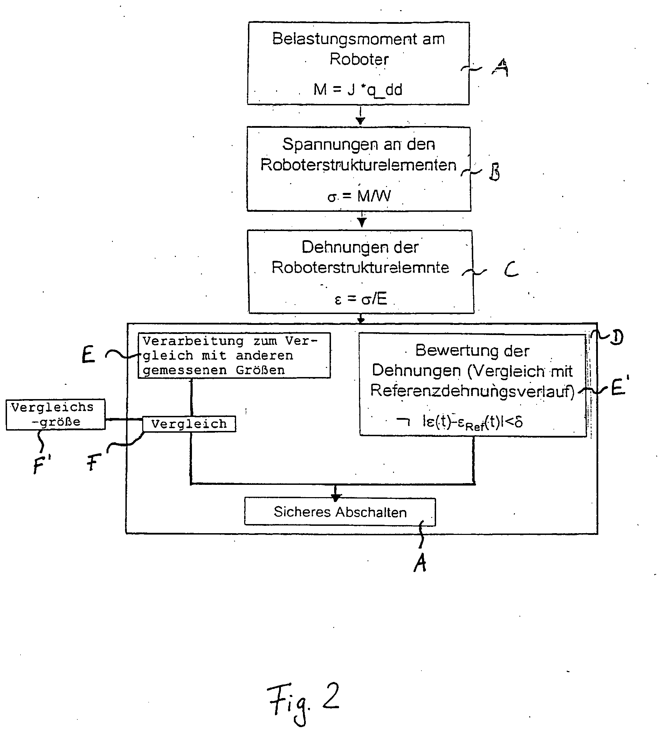

Die Fig. 2 zeigt ein Diagramm zur Erfassung und Bewertung von Materialspannungen an einem Roboterteil.

Bei beispielsweise einem Roboter entstehen durch Beschleunigungen und auch Kollisionen (Abbremsen, negative Beschleunigung) als Reaktion hierauf Reaktions-Belastungsmomente M gemäß

$$M = J * q\_dd, \hspace{4cm} (1),$$

wobei J das Massenträgheitsmoment und q_dd die Winkelbeschleunigung um eine Achse ist (Schritt A der Fig. 2).

Dieses Belastungsmoment führt gemäß

$$\sigma = M / W, \hspace{4cm} (2),$$

wobei W das Widerstandsmoment ist, zu Spannungen an den Roboterstrukturelementen $\sigma$ (Schritt B).

Diese Spannungen bewirken wiederum nach dem Hookschen Gesetz

$$\varepsilon = \sigma / E \hspace{4cm} (3)$$

Dehnungen $\varepsilon$ am Roboterteil, wobei E der Elastizitätsmodul ist, die durch Dehnungsmessstreifen erfasst bzw. gemessen werden können (Schritt C).

Die Messwerte der Dehnungen $\varepsilon$ können nun derart weiterverarbeitet werden, dass die Messwerte der Dehnungs- und damit Spannungsmessungen mit anderen Messwerten anderer Messgrößen, beispielsweise Motorstrommesswerten vergleichbar sind (Schritt E). In einem weiteren Schritt F erfolgt dann ein Vergleich mit einer solchen weiteren Messgröße F', und, in dem Falle, dass beide einen Fehler, eine gefährliche Situation oder dergleichen anzeigen, ein sicheres Abschalten (Schritt G). Zusätzlich oder alternativ kann vorgesehen sein, dass unmittelbar eine Bewertung der Dehnungen, d.h. der Vergleich mit einem Referenzdehnungsverlauf erfolgt (Schritt E') und, wenn der Vergleich ergibt, dass das Messergebnis aus dem Referenzdehnungsverlauf oder Referenzkorridor herausfällt, dann ebenfalls ein sicheres Abschalten erfolgt (Schritt G).

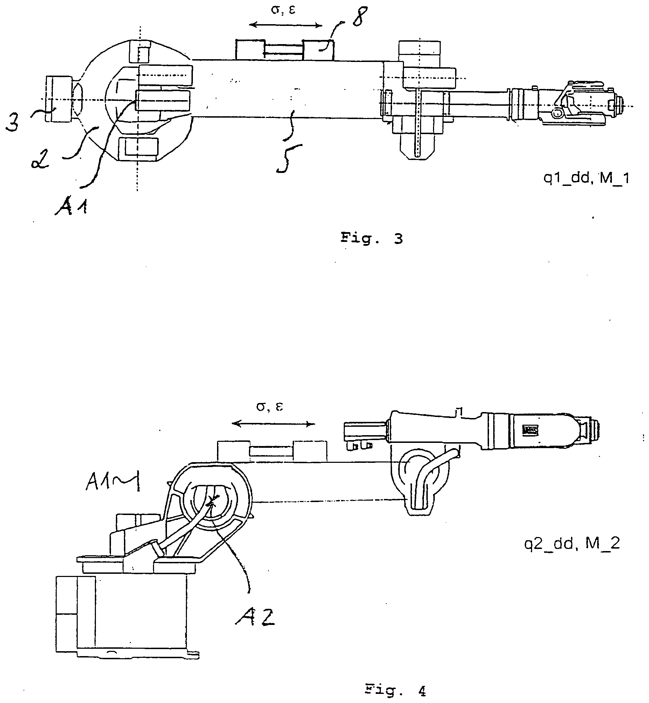

Die Fig. 3 zeigt, dass zur Erfassung der Belastungsmomente der Roboterschwinge bei einer Bewegung derselben (und der folgenden Roboterelemente) um die vertikale Achse A1 ein Dehnungsmessstreifen 8 an einer Seite (der rechten oder linken Seite der Roboterschwinge 5 angeordnet ist.

Demgegenüber zeigt die Fig. 4 das zur Erfassung der Reaktions- oder Belastungsmomente einer Bewegung um die erste horizontale Achse A2 ein entsprechender Dehnungsmessstreifen 8 auf der Oberseite (oder auf der Unterseite) der Schwinge 5 anzuordnen ist.

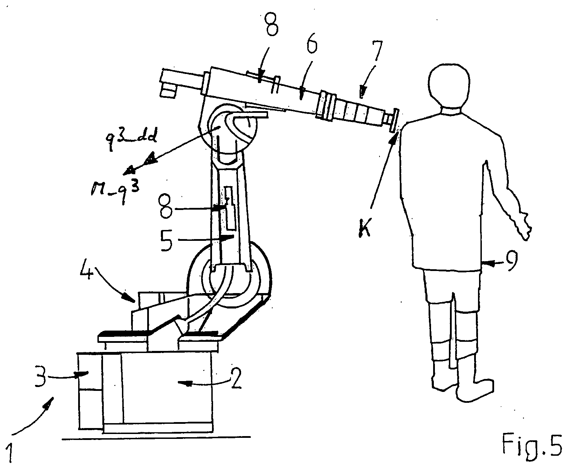

Die Fig. 5 bis 7 zeigen konkrete Ausgestaltungsbeispiele des erfindungsgemäßen Verfahrens und eines erfindungsgemäßen Roboters mit beweglichen Teilen sowie der Überwachung der Maschine bzw. des Roboters 1 mittels Erfassung der physikalischen Messgröße Materialspannung. Weiterhin ist in der Fig. 5 schematisch eine Person 9 dargestellt.

Schlägt beispielsweise ein Roboterarm 6 von oben, wie in Fig. 5 dargestellt, auf die Schulter einer Person oder schlägt er von oben auf einen anderen Gegenstand auf, so ergeben sich erhöhte Biegemomente im Roboterarm 6 und damit Materialspannungen in diesem, die mittels Messstreifen 8 am Roboterarm 6, insbesondere durch auf der Unter- und auf der Oberseite des Arms angeordneten Messstreifens 8 gemessen werden können. Entsprechendes gilt bei seitlichem Anschlagen des Roboterarms 6 gegen eine Person oder einen Gegenstand, wobei in diesem Falle vorzugsweise rechts und links am Roboterarm 6 angeordnete Messstreifen 8 zur Messung der Materialspannungen vorgesehen sind. Stößt der Roboterarm 6 mit seiner Vorderseite bzw. einem mit ihm verbundenen Werkzeug in Richtung der Erstreckung des Roboterarms 6 gegen einen Widerstand, wie gegen eine Person, so ergeben sich Biegemomente und damit Materialspannungen insbesondere in der Schwinge 4.

Wie schon unter Bezug auf Fig. 2 dargelegt und wie aus Fig. 5 ersichtlich ist, treten bei der Beschleunigung oder Verzögerung von Roboterachsen Momente gemäß der Formel

$$M\_q_i = q_i\_dd*J$$

auf, wobei $M\_q_i$ das Reaktionsmoment auf die Beschleunigung der Achse i, in der Darstellung der Fig. 5 der Achse A3, $q_i\_dd$ die Winkelbeschleunigung der Achse i und J das Massenträgheitsmoment ist. Diese Momente führen zu Materialspannungen, die durch geeignete Messwertaufnehmer, wie eben insbesondere Dehnungsmessstreifen oder lichtleiterbasierte Aufnehmer erfasst werden können.

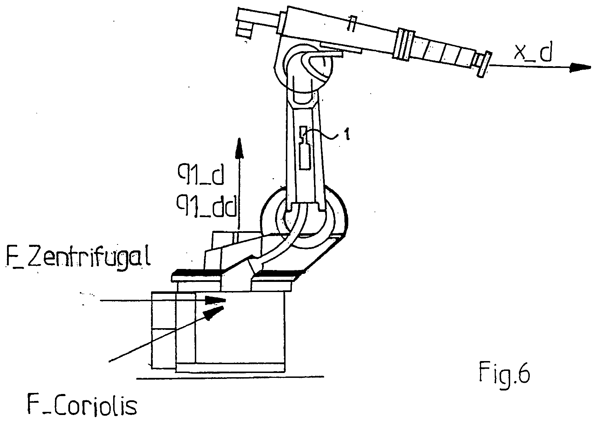

Anhand der Fig. 6 ist entnehmbar, dass bei konstanter Bewegung des Roboters Zentrifugal- und Corioliskräfte entsprechend

$$F\_Zentrifugal = m \cdot \overline{(q\_d)}^2 * r$$

bzw. die Corioliskraft

$$F\_Coriolis = 2 * m * (\overline{qd} \ x \ \overline{s-d}),$$

wobei F_Zentrifugal die Zentrifugalkraft, m die Masse, $\overline{q\_d}$ die Winkelgeschwindigkeit, r der Radius, F_Coriolis die Corioliskraft und $\overline{s\_d}$ die translatorische Geschwindigkeit ist.

Die die hierdurch entstehenden Materialspannungen erfassenden Sensoren liefern bei Betrieb des Roboters ein ständiges Abbild der Strukturbelastung. Die gewonnenen Messwerte können in mehrfacher Weise weiterverarbeitet und genutzt werden, insbesondere online zu Überwachungs- und Sicherungszwecken, um die gemessenen Werte permanent mit vorgegebenen Richtwerten oder Grenzwerten zu vergleichen um damit eine Sicherheit des Mensch-Maschine-Systems zu gewährleisten, indem Bewegungen, nämlich Geschwindigkeiten bzw. Beschleunigungen, in einem tolerierbaren Bereich gehalten werden und/oder bei Anstoßen eines Roboterteils gegen einen Menschen einen stillgesetzten Erfolg.

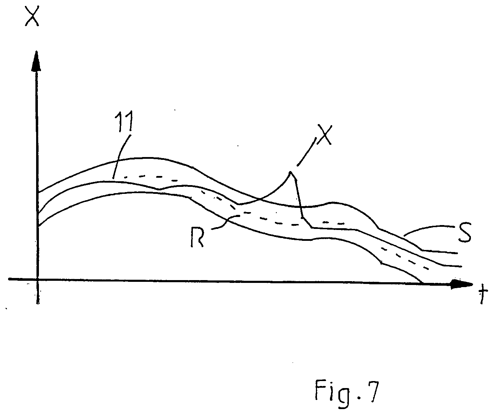

So zeigt die Fig. 7 in einem Diagramm, in dem der Ort eines Roboterteils über die Zeit hin aufgetragen ist, eine Referenzkurve R für eine vorgegebene Bewegung des Roboters bzw. eines Roboterteils. Der Referenzkurve R ist ein tolerabler Bereich als Referenz Korridor S zugeordnet. Weiterhin zeigt die Fig. 4 eine Messkurve M, die den tatsächlichen Ort des Roboterteils bei einem Betriebsablauf über die Zeit hin zeigt. Im Bereich X bewegt sich die Messkurve M aus dem Referenzkorridor S und zeigt damit eine unzulässige Bewegung oder Kollision mit nicht erwarteten Messwerten an. Hierauf kann beispielsweise ein Abschalten des Roboters bewirkt werden.

**Bezugszeichenliste**

| | |
|---|---|
| 1 | Industrieroboter |
| 2 | Robotersockel |
| 3 | Umrichter |
| 4 | Schwinge |
| 5 | Roboterschwinge |
| 6 | Roboterarm |
| 7 | Roboterhand |
| 8 | Dehnungsmessstreifen |
| 9 | Person |
| 11 | Überwachungseinrichtung |
| 12 | Überwachungseinheit |
| 13 | Überwachungseinheit |
| 14 | Überwachungseinheit |
| 15 | Vergleichseinheit |
| 16 | Modell |
| 17 | Schalteinrichtung |
| M | Messkurve |
| R | Referenzkurve |
| S | Referenz Korridor |
| X | Bereich |

**Patentansprüche**

1. Verfahren zum Überwachen von beweglichen Teilen eines Industrieroboters (1), bei dem Messwerte zweier unterschiedlicher Messgrößen erfasst und zumindest einer dieser Messwerte zu einem ersten Messergebnis verarbeitet wird, wobei der Messwert derart zu einem ersten Messergebnis verarbeitet wird, dass es mit dem Messwert der anderen Messgröße oder einem aufgrund dieses Messwertes gewonnenen zweiten Messergebnis vergleichbar ist, dass das erste Messergebnis mit dem Messwert der anderen Messgröße oder dem aufgrund dieses Messwertes gewonnenen zweiten Messergebnis verglichen wird und dass ein das Vergleichsergebnis charakterisierende Signal bereitgestellt wird, wobei als zumindest eine Messgröße Materialspannungen an mindestens zwei Seiten einer Schwinge (5) des Industrieroboters (1) oder eines Roboterarms (6) des Industrieroboters (1) und zwar an Ober- bzw. Unterseite und rechte bzw. linke Seite gemessen werden.

2. Verfahren nach Anspruch 1, **dadurch gekennzeichnet, dass** die Materialspannungen mittels mindestens eines Messwertaufnehmers (8) gemessen werden.

3. Verfahren nach Anspruch 1 oder 2, **dadurch gekennzeichnet, dass** die Materialspannungen mittels eines Dehnungsmessstreifens (8) gemessen werden.

4. Verfahren nach einem der Ansprüche 1 oder 2, **dadurch gekennzeichnet, dass** die Materialspannungen mittels piezo-elektrischer oder lichtleiterbasierten Aufnehmer gemessen werden.

5. Verfahren nach einem der Ansprüche 1 bis 4, **dadurch gekennzeichnet, dass** die Materialspannungen mittels auf mindestens zwei Flächen eines Roboterteils angeordneten Messwertaufnehmern (8) gemessen werden.

6. Verfahren nach einem der vorangehenden Ansprüche, **dadurch gekennzeichnet, dass** aktuelle Messwerte von Messgrößen bzw. Messergebnisse mit Referenzwerte verglichen werden.

7. Verfahren nach Anspruch 6, **dadurch gekennzeichnet, dass** aktuelle Messwerte von Messgrößen bzw. und/oder Messergebnisse mit Referenzwerten unter Berücksichtigung von Toleranzen verglichen werden.

8. Verfahren nach Anspruch 7, **dadurch gekennzeichnet, dass** Toleranzen durch Bildung eines Referenzkorridors zu einer Referenzkurve berücksichtigt werden.

9. Verfahren nach einem der vorangehenden Ansprüche, **dadurch gekennzeichnet, dass** bei Abweichungen von erwarteten Messwerten und/oder Messergebnissen ein Stillsetzen des Roboters erfolgt.

10. Industrieroboter (1), aufweisend zwei Messeinrichtungen zur Erfassung unterschiedlicher Messgrößen als Messwerte an beweglichen Teilen des Industrieroboters, **gekennzeichnet durch** mindestens eine Verarbeitungseinheit (12, 13, 14) für zumindest einen der Messwerte der Messgrößen zur Verarbeitung dieses Messwertes in ein mit dem anderen Messwert der anderen Messgröße oder einem aus diesem Messwert gewonnenen zweiten Messergebnis vergleichbaren ersten Messergebnis und durch eine Vergleichseinheit (15) zum Vergleichen des ersten Messergebnisses mit dem Messwert der anderen Messgröße oder einem aufgrund dieses Messwertes gewonnenen zweiten Messergebnisses und Messeinrichtungen zur Bestimmung von Materialspannungen, wobei die Einrichtungen zur Bestimmung von Materialverspannungen als Messwertaufnehmer ausgebildet sind, die an mindestens zwei Seiten einer Schwinge (5) des Industrieroboters (1) oder eines Roboterarms (6) des Industrieroboters (1) und zwar an Ober- bzw. Unterseite und rechte bzw. linke Seite angebracht sind.

11. Industrieroboter nach Anspruch 10, **dadurch gekennzeichnet, dass** die Einrichtungen zur Bestimmung von Materialspannungen als Dehnungsmessstreifen (8) ausgebildet sind.

12. Industrieroboter nach einem der Ansprüche 10 oder 11, **dadurch gekennzeichnet, dass** die Einrichtungen zur Bestimmung von Materialspannung als lichtleiterbasierte Aufnehmer ausgebildet sind.

13. Industrieroboter nach einem der Ansprüche 10 bis 12, **dadurch gekennzeichnet, dass** auf mindestens zwei Flächen eines Roboterteils jeweils mindestens eine Einrichtung zur Bestimmung von Materialspannungen angeordnet ist.

14. Industrieroboter nach einem der Ansprüche 10 bis 13, **gekennzeichnet durch** eine Überwachungseinrichtung (11), mit der mindestens eine Einrichtung zur Bstimmung von Materialspannungen an Maschinenteilen des Industrieroboters verbunden ist.

15. Industrieroboter nach Anspruch 13 oder 14, **dadurch gekennzeichnet, dass** die Überwachungseinrichtung (11) Einheiten zur Überwachung zumindest von Dehnungen der Maschinenstruktur des Industrieroboters sowie einer weiteren Messgröße aufweist.

16. Industrieroboter nach einem der Ansprüche 13 bis 15, **dadurch gekennzeichnet, dass** die Überwachungseinrichtung (11) eine Vergleichseinrichtung (15) zum Vergleich aktueller Messwerte und/oder Messergebnissen mit vorgegebenen Modellen für Roboterbewegungen (16) aufweist.

17. Industrieroboter nach einem der Ansprüche 15 oder 16, **dadurch gekennzeichnet, dass** die Überwachungseinrichtung (11) eine Schalteinrichtung (17) zum Abschalten des Industrieroboters aufweist.

**Claims**

1. Method for monitoring movable parts of an industrial robot (1), in which the measurement values of two different measured quantities are detected and at least one of these measurement values is processed into a first measurement result, whereby the measurement value is processed into a first measurement result such that it is comparable with the measurement value of the other measured quantity or a second measurement result obtained on the basis of said measurement value, in that the first measurement result is compared with the measurement value of the other measured quantity or the second measurement result obtained on the basis of said measurement value and in that a signal characterizing the comparison result is provided, whereby as at least one measured quantity material stresses are measured on at least two sides of a rocker (5) of the industrial robot (1) or of a robot arm (6) of the industrial robot (1), namely on the upper and/or lower side and on the right and/or left side.

2. Method according to claim 1, **characterised in that** the material stresses are measured by means of at least one measurement transducer (8).

3. Method according to one of claim 1 or 2, **characterised in that** the material stresses are measured by means of a stress gauge (8).

4. Method according to one of claims 1 or 2, **characterised in that** the material stresses are measured by means of piezoelectric or fibre optic-based sensors.

5. Method according to one of claims 1 to 4, **characterised in that** the material stresses are measured by means of measurement transducers (8) positioned on at least two surfaces of a robot part.

6. Method according to any one of the preceding claims, **characterised in that** current measured values of measured quantities or measurement results are compared with reference values.

7. Method according to claim 6, **characterised in that** current measurement values of measured quantities and/or measurement results are compared with reference values, whilst taking account of tolerances.

8. Method according to claim 7, **characterised in that** tolerances are taken into account by forming a reference corridor to a reference curve.

9. Method according to any one of the preceding claims, **characterised in that** in the case of divergences from expected measurement values and/or measurement results the robot is stopped.

10. Industrial robot (1), comprising two measuring devices for determining different measured quantities as measurement values on movable parts of the industrial robot, **characterised by** at least one processing unit (12, 13, 14) for at least one of the measurement values of the measured quantities for processing said measurement value into a first measurement result comparable with the other measurement value of the other measured quantity or a second measurement result obtained on the basis of said measurement value and by a comparison unit (15) for comparing the first measurement result with at least the measurement value of the other measured quantity or a second measurement result obtained on the basis of said measurement value and measuring devices for determining material stresses, whereby the measuring devices for determining material stresses are designed in the form of strain gauges (8) which are attached to at least two sides of a rocker (5) of the industrial robot (1) or of a robot arm (6) of the industrial robot (1), namely on the upper and/or lower side and on the right and/or left side.

11. Industrial robot according to claim 10, **characterised in that** the devices for determining material stress are designed in the form of strain gauges (8).

12. Industrial robot according to one of claims 10 to 11, **characterised in that** the devices for determining material stress are designed as fibre optic-based sensors.

13. Industrial robot according to one of claims 10 to 12, **characterised in that** in each case at least one device for determining material stresses is arranged on at least two surfaces of a robot part.

14. Industrial robot according to one of claims 10 to 13, **characterised by** a monitoring device (11) to which at least one device is connected for determining material stresses on machine parts of the industrial robot.

15. Industrial robot according to claim 13 or 14, **characterised in that** the monitoring device (11) comprises units for monitoring at least elongations of the machine structure of the industrial robot and a further measured quantity.

16. Industrial robot according to one of claims 13 to 15, **characterised in that** the monitoring device (11) comprises a comparison device (15) for comparing current measurement values and/or measurement results with predetermined models for robot movements (16).

17. Industrial robot according to one of claims 15 or 16, **characterised in that** the monitoring device (11) comprises a switching device (17) for switching off the industrial robot.

**Revendications**

1. Procédé de surveillance de parties mobiles d'un robot industriel (1), dans lequel des valeurs de mesure de deux grandeurs de mesure différentes sont détectés et au moins une de ces valeurs de mesure est traitée pour obtenir un premier résultat de mesure, dans laquelle la valeur de mesure est traitée de telle sorte pour obtenir un premier résultat de mesure que celui-ci peut être comparé à la valeur de mesure de l'autre grandeur de mesure ou avec un deuxième résultat de mesure obtenu sur la base de cette valeur de mesure, en ce que le premier résultat de mesure est comparé avec la valeur de mesure de l'autre grandeur de mesure ou avec le deuxième résultat de mesure obtenu sur la base de cette valeur de mesure et en ce qu'un signal caractérisant le résultat de la comparaison est fourni, dans laquelle en tant qu'au moins une grandeur de valeur les tensions de matériau sont mesurées sur au moins deux côtés d'un bras oscillant (5) du robot industriel (1) ou d'un bras de robot (6) du robot industriel (1), à savoir sur le côté supérieur et/ou inférieur et sur le côté droit et/ou gauche.

2. Procédé selon la revendication 1, **caractérisé en ce que** les tensions de matériau sont mesurées au moyen d'au moins un capteur de valeurs de mesure (8).

3. Procédé selon la revendication 1 ou 2, **caractérisé en ce que** les tensions de matériau sont mesurées au moyen d'une jauge d'extensométrie (8).

4. Procédé selon l'une des revendications 1 ou 2, **caractérisé en ce que** les tensions de matériau sont mesurées au moyen d'un capteur piézoélectrique ou basé sur un guide de lumière.

5. Procédé selon l'une des revendications 1 à 4, **caractérisé en ce que** les tensions de matériau sont mesurées au moyen de capteurs de valeurs de mesure (8) agencés sur au moins deux surfaces d'une pièce de robot.

6. Procédé selon l'une des revendications précédentes, **caractérisé en ce que** des valeurs de mesure actuelles de grandeurs de mesure ou de résultats de mesure, respectivement, sont comparées à des valeurs de référence.

7. Procédé selon la revendication 6, **caractérisé en ce que** des valeurs de mesure actuelles de grandeurs de mesure et/ou des résultats de mesure actuels, respectivement, sont comparés à des valeurs de référence, compte tenu de tolérances.

8. Procédé selon la revendication 7, **caractérisé en ce que** des tolérances sont prises en compte par la formation d'un corridor de référence vers une courbe de référence.

9. Procédé selon l'une des revendications précédentes, **caractérisé en ce qu'**en cas de déviations de valeurs de mesures attendues et/ou de résultats de mesure attendus, un arrêt du robot a lieu.

10. Robot industriel (1) présentant deux dispositifs de mesure pour détecter des grandeurs de mesure différentes en tant que valeurs de mesure sur des parties mobiles du robot industriel, **caractérisé par** au moins une unité de traitement (12, 13, 14) pour au moins une des valeurs de mesure des grandeurs de mesure pour le traitement de cette valeur de mesure dans un premier résultat de mesure comparable à l'autre valeur de mesure de l'autre grande de mesure ou dans un deuxième résultat de mesure obtenu à partir de cette valeur de mesure et par une unité de comparaison (15) pour comparer le premier résultat de mesure à la valeur de mesure de l'autre grandeur de mesure ou à un deuxième résultat de mesure obtenu sur la base de cette valeur de mesure et des dispositifs de mesure pour déterminer des tensions de matériau, dans lequel les dispositifs pour déterminer des tensions de matériau sont réalisés sous forme de capteurs de valeurs de mesure qui sont montés sur au moins deux côtés d'un bras oscillant (5) du robot industriel (1) ou d'un bras de robot (6) du robot industriel (1), à savoir sur le côté supérieur et/ou inférieur et sur le côté droit et/ou gauche.

11. Robot industriel selon la revendication 10, **caractérisé en ce que** les dispositifs pour déterminer des tensions de matériau sont réalisés sous forme de jauges d'extensométrie (8).

12. Robot industriel selon la revendication 10 ou 11, **caractérisé en ce que** les dispositifs pour déterminer des tensions de matériau sont réalisés sous forme de capteurs basés sur un guide lumière.

13. Robot industriel selon l'une des revendications 10 à 12, **caractérisé en ce qu'**au moins un dispositif pour déterminer des tensions de matériau est agencé sur chacune d'au moins deux surfaces d'une pièce de robot.

14. Robot industriel selon l'une des revendications 10 à 13, **caractérisé par** un dispositif de surveillance (11) auquel est relié au moins un dispositif pour déterminer des tensions de matériau sur des pièces de machine du robot industriel.

15. Robot selon la revendication 13 ou 14, **caractérisé en ce que** le dispositif de surveillance (11) présente des unités pour la surveillance au moins d'allongements des structures de machine du robot industriel ainsi que d'une autre grandeur de mesure.

16. Robot industriel selon l'une des revendications 13 à 15, **caractérisé en ce que** le dispositif de surveillance (11) présente un dispositif de comparaison (15) pour comparer des valeurs de mesure actuelles et/ou des résultats actuels avec des modèles prédéterminés pour des mouvements de robot (16).

17. Robot industriel selon l'une des revendications 15 ou 16, **caractérisé en ce que** le dispositif de surveillance (11) présente un dispositif de commutation (17) pour arrêter le robot industriel.

Fig.1

Belastungsmoment am
Roboter

$M = J \cdot q\_dd$

*A*

Spannungen an den
Roboterstrukturelementen

$\sigma = M/W$

*B*

Dehnungen der
Roboterstrukturelemnte

$\varepsilon = \sigma/E$

*C*

*D*

Verarbeitung zum Vergleich mit anderen
gemessenen Größen

*E*

Bewertung der
Dehnungen (Vergleich mit
Referenzdehnungsverlauf)

$\neg \; |\varepsilon(t) - \varepsilon_{Ref}(t)| < \delta$

*E'*

Vergleichs
-größe

Vergleich

*F'*  *F*

Sicheres Abschalten

*A*

Fig. 2

σ, ε

3

α

A1

q1_dd, M_1

**Fig. 3**

σ, ε

A1

A2

q2_dd, M_2

**Fig. 4**

$q\overset{3}{=}dd$

$M\_q^3$

Fig.5

Fig.6

Fig.7

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5130632 A